# EUROPÄISCHE PATENTANMELDUNG

(11) **EP 2 154 082 A1**
(43) Veröffentlichungstag der Anmeldung: **17.02.2010**
(21) Anmeldenummer: 09014107.8
(22) Anmeldetag: 13.12.2005
(51) Int. Cl.: B65D 75/58, B65D 77/20, B32B 27/08

(54) **Wiederverschließbare Verpackung**

(30) Priorität: 23.12.2004 DE 102004063410
(62) Teilanmeldung aus: 05112072.3
(71) Anmelder: Wipak Walsrode GmbH & Co. KG, 29656 Walsrode (DE)
(72) Erfinder: Nelke, Dorit, Dr., 21698 Bargestedt (DE); Jacobsen, Sven, Dr., 29683 Bad Fallingbostel (DE); Richards, Jaquie, 29664 Walsrode (DE); Klein, Rudi, 29664 Walsrode (DE); Kaschel, Gregor, Dr., 29699 Bomlitz (DE)
(74) Vertreter: Kutzenberger, Helga

(57) **Zusammenfassung**

Die vorliegende Erfindung betrifft eine wiederverschließbare Verpackung aus zwei miteinander verbundenen Verpackungselementen, wobei das Verpackungselement X) eine Mehrschichtfolie umfassend wenigstens eine Siegelschicht, wenigstens eine Schicht aus Haftklebstoff und wenigstens eine Trägerschicht aufweist und das Verpackungselement Y) aus einem Material ohne Siegelschicht besteht, und die beiden Verpackungselemente X) und Y) über eine Siegelung so verbunden sind, dass im Siegelbereich die Siegelfestigkeit zwischen der Siegelschicht a) und dem Material des Verpackungselements Y) größer ist als die Verbundhaftung zwischen der Siegelschicht a) bzw. einer Schichtfolge umfassend die Siegelschicht a) und der Schicht aus Haftklebstoff f), wodurch beim ersten Aufreißen der Verpackung diese Schicht im Bereich der Siegelung zum Wiederverschließen freigegeben wird.

## Beschreibung

Die vorliegende Erfindung betrifft eine wiederverschließbare Verpackung aus zwei miteinander verbundenen Verpackungselementen, wobei das erste Verpackungselement eine Mehrschichtfolie umfassend wenigstens eine Siegelschicht, wenigstens eine Haftklebstoffschicht und wenigstens eine Trägerschicht aufweist und das zweite Verpackungselement aus einem Material ohne Siegelschicht besteht, und das erste und das zweite Verpackungselement über eine Siegelung so verbunden sind, dass im Siegelbereich die Siegelfestigkeit zwischen der Siegelschicht und dem Material des zweiten Verpackungselements größer ist als die Verbundhaftung zwischen der Haftklebstoffschicht und der jeweils angrenzenden Siegelschicht bzw. Schichtfolge umfassend die Siegelschicht, wodurch beim ersten Aufreißen der Verpackung die Haftklebstoffschicht im Bereich der Siegelung zum Wiederverschließen freigegeben wird.

Wiederverschließbare Verpackungen sind für den Verbraucher von großem Nutzen, da diese Verpackungen dem Konsumenten ermöglichen, ein verpacktes Produkt portionsweise zu entnehmen und anschließend den verbliebenen Anteil des verpackten Produkts für eine weitere Verwendung wieder zu verschließen und zu lagern. Insbesondere bei Lebensmitteln lässt sich durch die Verwendung einer wiederverschließbaren Verpackung erreichen, dass diese mehrmals aus einer Verpackung entnommen werden können, so dass diese Lebensmittel ohne Qualitätsverlust nach und nach verzehrt werden können. Beispielsweise können Lebensmittel, die in einer wiederverschließbaren Verpackung gelagert werden, vor dem Verlust von Feuchtigkeit oder Aroma geschützt werden.

Für wiederverschließbare Verpackungen wurde u. a. eine Wiederverschlußanordnung entwickelt, die auf der Verwendung eines druckempfindlichen Klebstoffs beruht. Dazu weist das Verpackungsmaterial üblicherweise eine Schicht aus einem druckempfindlichen Klebstoff auf, die sich beim ersten Öffnen der Verpackung im Siegelbereich von den angrenzenden Siegelschicht ablöst, so dass die Schicht aus druckempfindlichen Klebstoff freigelegt wird. Das Wiederverschließen ist anschließend durch ein Aufeinanderdrücken der voneinandergelösten Teile im Siegelbereich möglich.

Dabei beruht der Mechanismus dieses Wiederverschlusses darauf, dass die Haftung zwischen den zum Verschließen der Verpackung versiegelten Siegelschichten, z. B. zwischen der Siegelschicht eines Deckels und einer Mulde, im Siegelbereich größer ist, als die Haftung zwischen der Schicht aus druckempfindlichem Klebstoff und der unmittelbar angrenzenden, miteinander versiegelten Siegelschichten.

Für solche Wiederverschlussanordnungen müssen beiden Verpackungselementen, wie z. B. einem Deckel und einer Mulde eine Siegelschicht aufweisen. Zur Erleichterung der Einstellung der gewünschten Siegelfestigkeit zwischen diesen Siegelschichten sind vorzugsweise beide Siegelschichten aus identischem thermoplastischen Material aufgebaut. Die bekannten Wiederverschlussanordnungen sind somit auf die Verwendung von Verpackungselementen beschränkt, die jeweils eine Siegelschicht, vorzugsweise jeweils eine Siegelschicht aus identischem Material aufweisen.

Vorzugsweise weisen die bekannten wiederverschließbaren Verpackungen in einem an die Siegelung angrenzenden Bereich außerdem noch Einkerbungen auf, um das Öffnen der versiegelten Verpackung zu erleichtern. Hierfür sind speziell angepasste Siegelwerkzeuge notwendig, wodurch sich die Herstellung solcher wiederverschließbarer Verpackungen verteuert und gegebenenfalls zusätzlich die Materialauswahl, aus denen die Verpackungselemente bestehen können, limitiert wird.

Aufgabe der vorliegenden Erfindung war es daher, bei einer Vielzahl von weiteren bekannten Verpackungen, bei denen aufgrund des Materials, aus dem zumindest ein wesentliches Verpackungselement besteht, keine Wiederverschließbarkeit im aufgeführten Sinn gegeben ist, eine Wiederverschließbarkeit zu gewährleisten, ohne dass diese Elemente in ihrer Struktur bzw. in ihrem Aufbau verändert werden.

Diese Aufgabe wird durch das Bereitstellen einer versiegelten, wiederverschließbaren Verpackung aus zwei Verpackungselementen X) und Y) gelöst, von denen das Verpackungselement X) aus einer Mehrschichtfolie umfassend wenigstens eine Siegelschicht a), wenigstens eine Schicht aus Haftklebstoff f) und wenigstens eine Trägerschicht g) aufweist und das Verpackungselement Y) aus einem Material ohne Siegelschicht besteht,
wobei die Siegelschicht a) des Verpackungselements X) eine um wenigstens 5 °C niedrigere Erweichungstemperatur als das Material des Verpackungselements Y) aufweist,
und die beiden Verpackungselemente X) und Y) im Bereich ihrer aufeinanderliegenden Auflageflächen über eine Siegelung so verbunden sind, dass im Siegelbereich die Siegelfestigkeit zwischen der Siegelschicht a) und dem Material des Verpackungselements Y) größer ist als die Verbundhaftung zwischen der Siegelschicht a) bzw. einer Schichtfolge umfassend die Siegelschicht a) und der Schicht aus Haftklebstoff f), wodurch beim ersten Öffnen der Verpackung diese Haftklebstoff-Schicht im Bereich der Siegelung zum Wiederverschließen freigegeben wird.

Vorzugsweise sollte im Siegelbereich die Siegelfestigkeit (N/15 mm) um wenigstens 1,5 N/15 mm, vorzugsweise wenigstens 2 N/15 mm, größer sein als die Verbundhaftung (N/15 mm) gemessen in Anlehnung an die Testmethode FINAT Nr. 2, um eine erfindungsgemäße Verpackung zu öffnen und wiederzuverschließen. Eine Einkerbung in dem an den Siegelbereich angrenzenden Bereich ist hierfür nicht notwendig.

Unter Erweichungstemperatur wird gemäß der vorliegenden Erfindung die Vicat Erweichungstemperatur A gemessen nach der Methode VST/A/50 gemäß ISO 306 verstanden.

In einer bevorzugten Ausführung ist die Erweichungstemperatur der Siegelschicht a) um wenigstens 10 °C, bevorzugt um wenigstens 15 °C, besonders bevorzugt um wenigstens 20 °C niedriger als die Erweichungstemperatur des Materials des Verpackungselements Y).

Die Siegelschicht a) des Verpackungselements X), basiert vorzugsweise auf wenigstens einem Polymeren ausgewählt aus der Gruppe umfassend Polyolefine, Polyester, Copolyester und Olefin-Copolymere. Bevorzugt basiert die Siegelschicht a) auf wenigstens einem Polymeren ausgewählt aus der Gruppe umfassend Polyethylene; Polyethylen hoher Dichte (HDPE), Polyethylen niedriger Dichte (LDPE) oder lineares Polyethylen niedriger Dichte (LLDPE); Copolyester; Polyester, besonders bevorzugt Polyethylenterephthalat (PET) und Polybutylenterephthalat (PBT); Ethylen-Propylen-Copolymerisat; Ethylen-Vinylacetat-Copolymerisat; Copolymerisate aus Ethylen und Estern der Acrylsäure oder Methacrylsäure; Copolymerisate aus Ethylen und Acrylsäure oder Methacrylsäure sowie deren Salze, besonders bevorzugt Natrium- oder Magnesium-Salze, und Styrolcopolymerisate.

Weiterhin kann es auch vorteilhaft sein, die Siegelschicht a) mehrlagig zu gestalten, d. h. die Siegelschicht a) aus mindestens 2 Lagen der genannten Polymeren, die vorzugsweise zu derselben Art Polymeren gehören, aufzubauen. Bevorzugt weisen die Polymeren unterschiedliche physikalischen Eigenschaften auf.

Die Mehrlagigkeit der Siegelschicht kann auch darin bestehen, das an die Siegelschicht a) eine Schichtfolge bestehend aus einer ggf. Haftvermittlerschicht b), wenigstens einer Barriereschicht c), ggf. einer weiteren Haftvermittlerschicht d), ggf. wenigstens einer Schicht aus olefinischen Homo- und/oder Copolymeren e) angeordnet ist, die in unmittelbaren Kontakt mit der Schicht aus Haftklebstoff f) steht. Zwischen der Schicht aus Haftklebstoff f) und der Trägerschicht g) kann eine weitere Schicht aus olefinischen Homo- und/oder Copolymeren h) angeordnet sein. Die Haftvermittlerschichten b) und d) basieren vorzugsweise jeweils auf einer Mischung aus Polyolefinen mit aufgepfropften Maleinsäureanhydrideinheiten und/oder Olefin-Copolymerisaten mit aufgepropften Maleinsäureanhydrideinheiten.

Die Barriereschicht c) hat vorzugsweise eine Gasbarriere- und/oder Migrationsbarrierewirkung. Die Gasbarriereschicht ist vorzugsweise im Wesentlichen undurchlässig für Sauerstoff und/oder Wasserdampf. Die Migrationsbarriereschicht verhindert vorzugsweise eine Globalmigration, insbesondere von niedermolekularen Bestandteilen aus dem Verpackungsmaterial, in den Innenraum der Verpackung. Auf diesem Weg lässt sich vorteilhafterweise eine Globalmigration in das Füllgut sowie eine unangenehme Geruchsbildung in der Verpackung vermeiden.

Die Barriereschicht c) basiert vorzugsweise auf wenigstens einem thermoplastischen Polymer ausgewählt aus der Gruppe umfassend Ethylen-Vinylalkohol-Copolymerisat, Polyvinylidenchlorid, Polyester, Polyamid und Copolyamid.

In einer bevorzugten Ausführung weist das Polyamid und/oder das Copolyamid anorganische Füllstoffe auf. Diese Füllstoffe sind bevorzugt Phyllosilikate, Oxide, Oxihydrate und/oder -carbonate, besonders bevorzugt Montmorillonite und/oder Glimmer. Zumindest ein Teil der Füllstoffe kann vorzugsweise nanoskalig sein. Der Anteil der nanoskaligen anorganischen Füllstoffe beträgt vorzugsweise 10 - 3000 ppm, besonders bevorzugt 50 - 2000 ppm, bezogen auf das Gesamtgewicht der Barriereschicht c).

Die Dicke der Barriereschicht c) beträgt vorzugsweise 0,5 bis 20 µm, bevorzugt 1 bis 10 µ.

Sofern zwischen der Barriereschicht c) und der Schicht aus Haftklebstoff f) und/oder zwischen der Schicht aus Haftklebstoff f) und der Trägerschicht g) ggf. aus produktionstechnischen Gründen auch eine Schicht e) und/oder eine Schicht h) aus mindestens einem olefinischen Homo- oder Copolymeren angeordnet ist, basiert diese bevorzugt auf einem Polyethylen, einem Ethylen-Copolymerisat, bevorzugt einem Ethylen-Vinylacetat-Copolymerisat oder auf einer Mischung der genannten Polymeren. Bevorzugt bestehen diese Schichten e) und h) aus LDPE, HDPE, LLDPE oder m-PE (metallocen Polyethylen) oder einer Mischung aus mindestens zwei der genannten Polyethylene oder mindestens einem genannten Polymeren mit einem Ethylen/Vinylacetat-Copolymerisat, ganz besonders bevorzugt aus LDPE, Ethylen/Vinylacetat-Copolymerisat oder deren Mischung.

Bevorzugt sind die Polymeren der Schichten e) und h) identisch mit den Polymeren der Siegelschicht a).
Die Schicht aus Haftklebstoff f) basiert vorzugsweise auf wenigstens einem Polymer ausgewählt aus der Gruppe umfassend Polymere und Copolymere von Acrylsäureestern; Polymere und Copolymere von Polyvinylethern; Copolymere aus Butadien und Styrol, bevorzugt Styrol-Butadien-Styrol Copolymer (SBS); Copolymere aus Styrol und Isopren, bevorzugt Styrol-Isopren-Styrol Block-Copolymere (SIS); Copolymere aus Styrol, Butadien und Ethylen, bevorzugt Stryrol-Ethylen-Butadien-Styrol Copolymere (SEBS); Polyvinylacetate; Polyurethane; Polychloroprene; Polyisobutylene; Polyisoprene; Butylkautschuk und Naturlatex. Der Haftklebstoff ist vorzugsweise ein druckempfindlicher Haftklebstoff der bei der Umgebungstemperatur fest ist und bei leichtem Anpressdruck auf einer Vielzahl unterschiedlicher Unterlagen haftet.

Die Dicke der Schicht f) beträgt vorzugsweise 2 bis 30 µm, besonders bevorzugt bis 20 µm, ganz besonders bevorzugt 10-15 µm.

Der Haftklebstoff kann in Form einer Lösung in wenigstens einem organischen Lösungsmittel, bevorzugt in wenigstens einem Lösungsmittel ausgewählt aus der Gruppe umfassend Ethylacetat, Methylethylketon, Hexan, Heptan und Petrolether, einer wässrigen Dispersion oder auch einer Schmelze (sogenannte "Hotmelt"-Klebstoffe) auf das Substrat aufgetragen werden. Lösungsmittelfreie, reaktive Systeme, insbesondere druckempfindliche Klebstoffe basierend auf Polyurethan, werden ggf. zur (Nach)-Härtung mit UV- oder Elektronenstrahlen bestrahlt.

Der Haftklebstoff kann auch zusammen mit der weiteren Schichtenfolge des Verpackungselements X) in einem Coextrusionsverfahren extrudiert werden (sogenannte "extrudierbare Hotmelt"-Klebstoffe). Sofern zur Herstellung des Verpackungselements X) ein extrudierbarer Hotmelt-Klebstoff verwendet wird, weist das Verpackungselement X) eine Schicht h) aus wenigstens einem extrudierbaren olefinischen Homo- und/oder Copolymeren auf.

Die Schicht aus Haftklebstoff f) kann ggf. Weichmacher, Füllstoffe, Konservierungsmittel, Antioxidantien, Stabilisatoren und/oder Farbstoffe aufweisen. Die erfindungsgemäß verwendeten Haftklebstoffe zeichnen sich durch einen neutralen Geruch aus und sind für den indirekten Kontakt mit Lebensmitteln zugelassen.

Die Schicht aus Haftklebstoff f) kann in unmittelbarem Kontakt mit der Siegelschicht a) oder bei einer mehrlagigen Siegelschicht umfassend die Schichtfolge a) bis c) bzw. d) oder e) mit der Schicht c) bzw. d) oder e) vorliegen.

An die Schicht aus Haftklebstoff f) schließt eine vorzugsweise die Außenseite der Verpackung bildende Trägerschicht g) an, die ggf. mehrlagig sein kann und auf wenigstens einem Material ausgewählt aus der Gruppe umfassend thermoplastische Polymerisate, Metalle, Papier, Pappe, Karton und Glas basiert.

Bevorzugt umfasst die Trägerschicht g) ein thermoplastisches Polymerisat ausgewählt aus der Gruppe umfassend Polyolefine, Olefin-Copolymerisate, Polyester, Copolyester, Polystyrole, Polyurethane, Polycarbonate, Polyvinylidenchloride und Polyamide. Das Metall wird vorzugsweise ausgewählt aus der Gruppe umfassend Aluminium und Weißblech.

Die Dicke der ggf. mehrlagigen Trägerschicht g) kann in einem weiten Bereich variieren und hängt u. a. davon ab, welchen mechanischen Belastungen die Verpackung im Gebrauch unterworfen ist, ohne dass dabei die ggf. notwendige Thermoverformbarkeit der erfindungsgemäß zum Einsatz kommenden Mehrschichtfolie erkennbar beeinträchtigt wird. Bevorzugt beträgt die Dicke der Trägerschicht g) 25 bis 5000 µm, besonders bevorzugt 50 µm bis 1000 µm, ganz besonders bevorzugt mindestens 50 µm bis 500 µm. Sofern das Verpackungselement X) als Deckel verwendet wird, beträgt die Dicke 30 bis 100 µm.

Die Trägerschicht ist so beschaffen, dass sie bei den Temperaturen des Siegelprozesses nicht schmilzt.

Als Material für das Verpackungselement Y) wird wenigstens ein Material ausgewählt aus der Gruppe umfassend thermoplastische Polymerisate, Metalle, Papier, Pappe, Karton und Glas eingesetzt.

In einer bevorzugten Ausführung wird als thermoplastisches Polymerisat wenigstens ein Polymerisat ausgewählt aus der Gruppe umfassend Polyolefine, bevorzugt Polypropylene, Olefin-Copolymerisate; Polyester, bevorzugt Polyethylenterephthalate (PET) oder Polybutylenterephthalate (PBT); Copolyester; Polystyrole; Polyurethane; Polycarbonate; Polyvinylchloride; Polyvinylidenchloride und Polyamide verwendet. Als Metall wird vorzugsweise wenigstens ein Metall ausgewählt aus der Gruppe umfassend Aluminium und Weißblech eingesetzt.

Das Verpackungselement Y) kann ggf. auch mehrschichtig aufgebaut sein, wobei als Schichtmaterialien die genannten Materialien zum Einsatz kommen. Vorzugsweise kann ein solcher mehrschichtiger Aufbau auch eine Gas- und/oder Aromabarriere-Schicht aus den vorstehend genannten Materialien aufweisen.

Die Erweichungstemperatur der Siegelschicht a) beträgt im allgemeinen 80 °C bis 160 °C, bevorzugt 100 °C bis 140 °C. Die Dicke der ggf. mehrlagigen Siegelschicht a) beträgt 5 bis 80 µm, bevorzugt 10 bis 60 µm, ganz besonders bevorzugt 10 bis 30 µm.

Die Erweichungstemperatur des Materials, aus dem zumindest der Teil des Verpackungselements Y) besteht, der mit der Siegelschicht a) des Verpackungselements X) in Berührung kommt, sollte um mindestens 5°C, vorzugsweise um mindestens 10 °C, besonders bevorzugt um mindestens 20 °C höher liegen als die Erweichungstemperatur der Siegelschicht a) des Verpackungselements X). Die Erweichungstemperatur sollte bei wenigstens 90 °C bis 300 °C und darüber liegen.

Die Wandstärke des Verpackungselements Y) kann in einem weiten Bereich variieren. Sie hängt davon ab, welchen mechanischen Belastungen die Verpackung ggf. beim Gebrauch und bei der Lagerung unterworfen ist. Bevorzugt beträgt die Wandstärke des zweiten Verpackungselements Y) 50 bis 5000 µm, besonders bevorzugt 100 bis 1000 µm, ganz besonders bevorzugt 100 bis 500 µm.

Durch Einstellung des Siegeldrucks und der Siegeltemperatur gelingt es, dass die Siegelfestigkeit zwischen der Siegelschicht a) des Verpackungselements X) und dem Oberflächenmaterial des Verpackungselements Y) im Siegelbereich fester ist als die Verbund haftung zwischen der Schicht aus Haftklebstoff f) und der jeweils daran angrenzenden Schichtfolge a) bis e) bzw. c). Die Siegelbedingungen sind im allgemeinen durch einfache Vorversuche feststellbar. Damit wird bewirkt, dass beim ersten Öffnen der Verpackung im Siegelbereich die Klebstoffschicht freigegeben wird, wodurch ein problemloses Wiederverschließen zur einwandfreien, weiteren Lagerung des verbleibenden Füllgutes möglich wird. Besonders einfach gelingt dies, wenn die Siegelfestigkeit (gemessen gemäß den Angaben in der vorliegenden Anmeldung in N/15 mm) wenigstens um 1,5 vorzugsweise um wenigstens 2 größer ist als die vorstehend erwähnte Verbundhaftung gemessen in Anlehnung an die Testmethode FINAT Nr. 2 in N/15 mm.

So gelingt es beim ersten Öffnen der Verpackung, dass der im Bereich der Siegelung befindliche Teil der Siegelschicht a) auf dem Verpackungselement Y) verbleibt, wodurch die Schicht aus Haftklebstoff f) im Bereich der Siegelung freigegeben wird.

Die Schichten des Verpackungselements X) und/oder das Material des Verpackungselement Y) können bedruckt und/oder eingefärbt sein.

Zur Herstellung der erfindungsgemäßen Verpackungen kann die Schichtfolge für das Verpackungselement X) bzw. das Material für das Verpackungselement Y) nach unterschiedlichen Fertigungsprozessen hergestellt bzw. verarbeitet werden. Hierzu können alle bekannten Herstellungsverfahren eingesetzt werden.

Sofern das Verpackungselement X) als eine Verpackungsmulde vorliegen soll, wird die Mehrschichtfolie, vorzugsweise in einer Tiefziehanlage verformt, befüllt und mit dem Verpackungselement Y) zu der erfindungsgemäßen Verpackung versiegelt.

In einer weiteren bevorzugten Ausführung wird das Material des Verpackungselements Y) geformt, vorzugsweise zu einem offenen Behälter, befüllt und mit dem Verpackungselement X) zu der erfindungsgemäßen Verpackung, versiegelt.

Vorzugsweise wird zunächst das Verpackungselement, das das zu verpackende Gut aufnimmt, zu einem offenen Behälter geformt, der vorzugsweise zum Versiegeln mit dem anderen Verpackungselement eine Auflagefläche, vorzugsweise einen umlaufenden Rand an der Öffnung des Behälters aufweist. Diese Auflagefläche kann vorzugsweise bereits durch die Wandstärke des zu einem offenen Behälter geformten Verpackungselements gegeben sein.

Bei den beiden Verpackungselementen X) bzw. Y) handelt es sich vorzugsweise jeweils um einen Deckel bzw. eine Verpackungsmulde zur Aufnahme eines Füllguts, bevorzugt zur Aufnahme eines Lebensmittels. Das Lebensmittel kann dabei sowohl in fester Form als auch in flüssiger Form, vorzugsweise in fester Form, vorliegen.

In einer bevorzugten Ausführung der vorliegenden Erfindung basiert die Siegelschicht a) des Verpackungselements X) auf einem Copolyester und das Material des Verpackungselements Y) auf einem amorphen oder kristallinen Polyethylenterephthalat.

In einer weiteren bevorzugten Ausführung der vorliegenden Erfindung basiert die Siegelschicht a) des Verpackungselements X) auf einem Ethylen-Propylen-Copolymerisat und das Verpackungselement Y) auf Polypropylen.

Ebenfalls bevorzugt ist eine Ausführung der erfindungsgemäßen Verpackung, gemäß der die Siegelschicht a) des Verpackungselements X) auf einem Copolyester oder Ethylen-Vinylacetat-Copolymerisat basiert und das Verpackungselement Y) aus Polyvinylchlorid oder Polyvinylidenchlorid besteht.

In einer weiteren bevorzugten Ausführung der vorliegenden Erfindung basiert die Siegelschicht a) des Verpackungselements X) auf einem Copolyester und das Verpackungselement Y) auf Polycarbonat.

In einer ebenso bevorzugten Ausführung der vorliegenden Erfindung basiert die Siegelschicht a) des Verpackungselements X) auf einem Ethylen-Vinylacetat-Copolymerisat bzw. Copolymerisat aus Ethylen und Estern der Acrylsäure oder Methacrylsäure bzw. Copolymerisat aus Ethylen und Acrylsäure oder Methacrylsäure sowie deren Salze, bevorzugt Natrium- oder Magnesium-Salze, bzw. einem Copolyester und das Verpackungselement Y) ist aus Metall, bevorzugt Aluminium.

Ebenfalls bevorzugt ist eine Ausführung der erfindungsgemäßen Verpackungen, gemäß in der die Siegelschicht a) des Verpackungselements X) auf einem Polyethylen, einem Copolymerisat aus Ethylen und Estern der Acrylsäure oder Methacrylsäure, Copolymerisat aus Ethylen und Acrylsäure oder Methacrylsäure sowie deren Salze, bevorzugt Natrium- oder Magnesium-Salze, einem Copolyester oder Mischungen dieser Polymerisate basiert und das Verpackungselement Y) aus Papier ist.

Weiterhin bevorzugt ist eine Ausführung der erfindungsgemäßen Verpackung, gemäß der die Siegelschicht a) des Verpackungselements X) auf einem Polyolefin basiert und das Verpackungselement Y) aus wenigstens einem Polyolefin hergestellt wurde.

In einer weiteren bevorzugten Ausführung der erfindungsgemäßen Verpackung basiert die Siegelschicht a) des Verpackungselements X) auf Polyethylen, einem Copolymerisat aus Ethylen und Acrylsäure oder Methacrylsäure oder einer Mischung dieser Polymere und das Verpackungselement Y) ist aus Glas.

Ebenfalls bevorzugt ist eine Ausführung der erfindungsgemäßen Verpackungen, gemäß der die Siegelschicht a) des ersten Verpackungselements X) auf einem Ethylen-Vinylacetat-Copolymerisat bzw. Copolymerisat aus Ethylen und einem Ester der Acrylsäure oder Methacrylsäure bzw. Copolymerisat aus Ethylen und Acrylsäure oder Methacrylsäure sowie deren Salze, bevorzugt Natrium- oder Magnesium-Salze, bzw. einem Copolyester basiert und das Verpackungselement Y) aus Weißblech ist.

Weiterhin bevorzugt ist eine Ausführung der erfindungsgemäßen Verpackungen, gemäß der die Siegelschicht a) des Verpackungselements X) auf einem Copolymerisat aus Ethylen und Acrylsäure oder Methacrylsäure sowie deren Salze basiert und das Verpackungselement Y) aus Polystyrol ist.

Die erfindungsgemäßen Verpackungen eigenen sich bevorzugt zur Verpackung von Lebensmitteln, wie Käse, Wurst, Schinken, Kuchen, Süßigkeiten, Fleischwaren, Soßen, Getränken, Joghurt, Gewürzen, Reis, Hülsenfrüchten, Obst usw., die insbesondere vorzugsweise zum mehrmaligen Verbrauch bzw. Verzehr vorgesehen sind. Dies gilt auch für die Verpackung von Gütern jeder Art, die erst nach und nach verbraucht werden.

### Methode zur Bestimmung der Verbundhaftung

Die Verbundhaftung zwischen der Schicht aus Haftklebstoff f) und der angrenzenden Siegelschicht a) bzw. dem angrenzenden Schichtverbund aus den Schichten a) bis c) bzw. a) bis e), wobei die Schicht c) bzw. e) in unmittelbaren Kontakt mit der Schicht f) ist, der für das Verpackungselement X) verwendeten Mehrschichtfolie wird in Anlehnung an die Testmethode FINAT Nr. 2 gemessen. Dazu wird die zu prüfende Mehrschichtfolie zunächst gegen das zweite Verpackungselement gesiegelt. Daraus werden mit einem Streifenschneider Streifen mit einer Breite von 15 mm und einer Länge von 60 mm geschnitten. An den zu prüfenden Streifen der gesiegelten Mehrschichtfolie wird mechanisch eine Trennung in der Mehrschichtfolie zwischen der Schicht aus Haftklebstoff und der angrenzenden zur Siegelschicht angeordneten Schicht, vorzugsweise der Siegelschicht, bis zum Siegelbereich durchgeführt und die Streifen auf eine Standardtestplatte mit Hilfe eines doppelseitig klebenden Bandes geklebt.

Der Streifen wird danach in der Zugprüfungsmaschine so befestigt, dass die voneinander getrennten Folienverbunde einen Winkel von ca. 90 ° bilden und mit einer Geschwindigkeit von 300 mm/min getrennt werden können. Die Messtrecke beträgt 20 mm. Innerhalb der Messtrecke von 20 mm des Siegelbereichs wird die mittlere Kraft und die maximale Kraft zur Trennung bestimmt.

Als Meßgeräte für die Prüfung der Verbundhaftung werden
- eine rechnergesteuerte Zugprüfungsmaschine Zwick 1435 (Kraftmesskopf 50 N),
- eine Rollenhalterung für Abzug 90 °,
- eine planparallele Standard-Testplatte aus Stahl,
- ein Klebeband tesafix 4960 (Fa. Beiersdorf), Breite 50 mm, zum Fixieren der Probe
verwendet.

Die Verbundhaftung entspricht der mittleren Kraft, die benötigt wird, die vorstehend voneinander getrennten Folienverbunde mit einem Trennwinkel (90°) und der angegebenen Geschwindigkeit im Siegelbereich zu trennen. Diese Kraft wird in N/mm x Streifenbreite angegeben.

### Methode zur Bestimmung der Siegelfestigkeit

Die Messung der Siegelfestigkeit zwischen den beiden Verpackungselementen erfolgt nach derselben Methode und mit Hilfe derselben Apparatur wie sie für die Messung der Verbundhaftung beschrieben ist. Dazu werden die Teststreifen mit einer Breite von 15 mm und einer Länge von 60 mm geschnitten. Die Trennung der Teststreifen aus den beiden, miteinander versiegelten Verpackungselementen erfolgt zunächst so, dass die nicht verbundenen, lose aufeinanderliegenden Teile des aufgeklebten Teststreifens bis zum Siegelbereich aufgeklappt und in die Zugprüfmaschine so eingespannt werden, dass sie einen Winkel von 90° bilden. Dann werden sie mit einer Geschwindigkeit von 300 mm/min. voneinander getrennt. Die Messstrecke beträgt 20 mm. Innerhalb der Messstrecke von 20 mm des Siegelbereichs wird die mittlere und die maximale Kraft zur Trennung der Siegelung bestimmt.

Die Siegelfestigkeit entspricht der mittleren Kraft, die benötigt wird, die beiden Verpackungselemente im Siegelbereich mit einem Trennwinkel von 90° und der angegebenen Geschwindigkeit zu trennen. Diese Kraft wird in N/mm x Streifenbreite angegeben.

### Beispiele

Die aufgeführten Beispiele dienen zur Illustration der Erfindung und schränken den erfindungsgemäßen Gedanken nicht ein.

In der nachfolgenden Tabelle 1 sind erfindungsgemäße Verpackungen aufgeführt, die aus einem Verpackungselement X) und einem Verpackungselement Y) bestehen, die miteinander versiegelt sind. Die entsprechendem Siegelparameter und die daraus resultierende Siegelfestigkeit in N/15 mm gemessen nach der vorstehend angegebenen Methode sowie die Verbundhaftung im Siegelbereich zwischen der Schicht aus Haftklebstoff f) und der angrenzenden Schicht c) bzw. e) gemessen nach der vorstehend angegebenen Methode in N/15 mm sind ebenso in der Tabelle 1 aufgeführt.

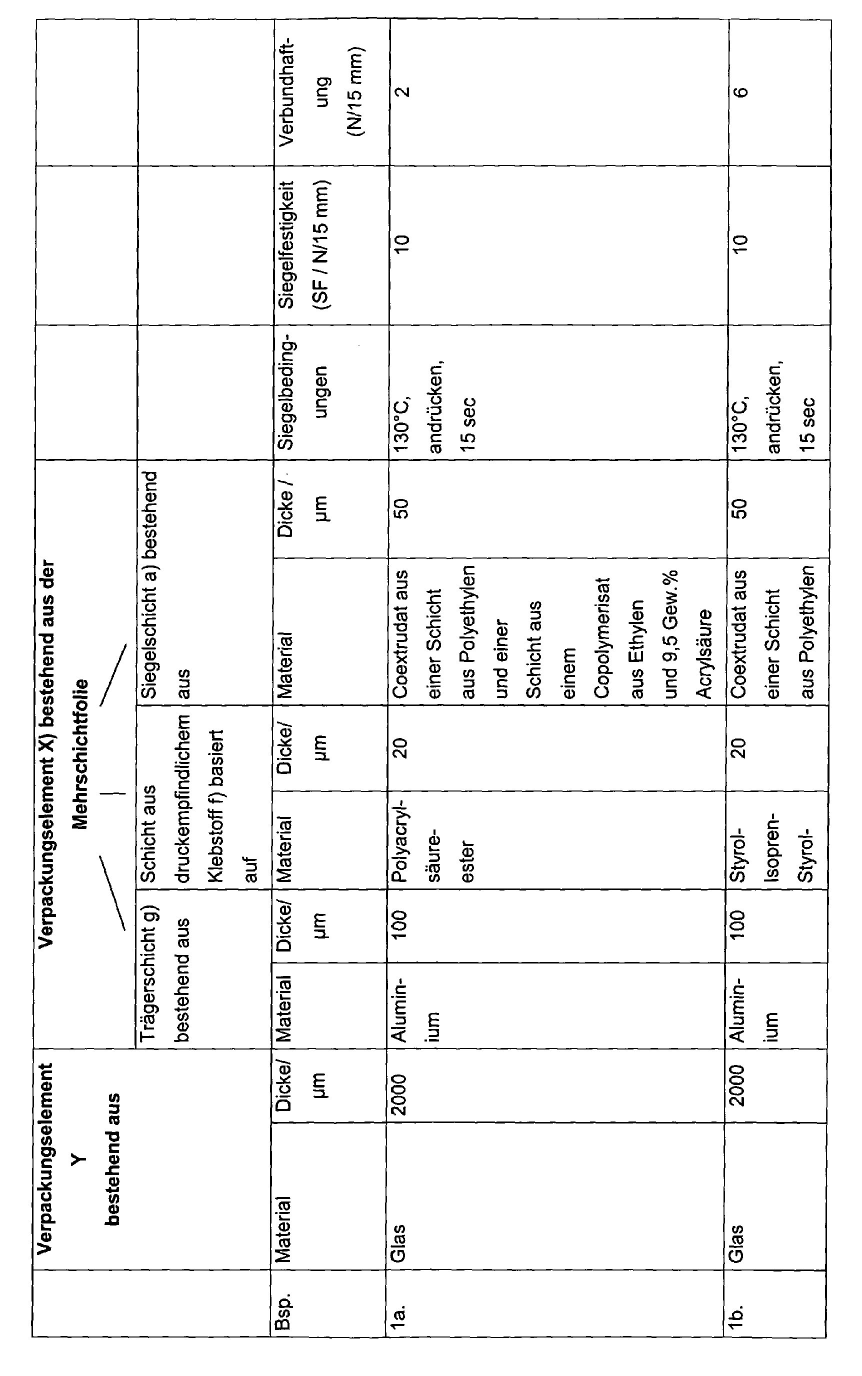

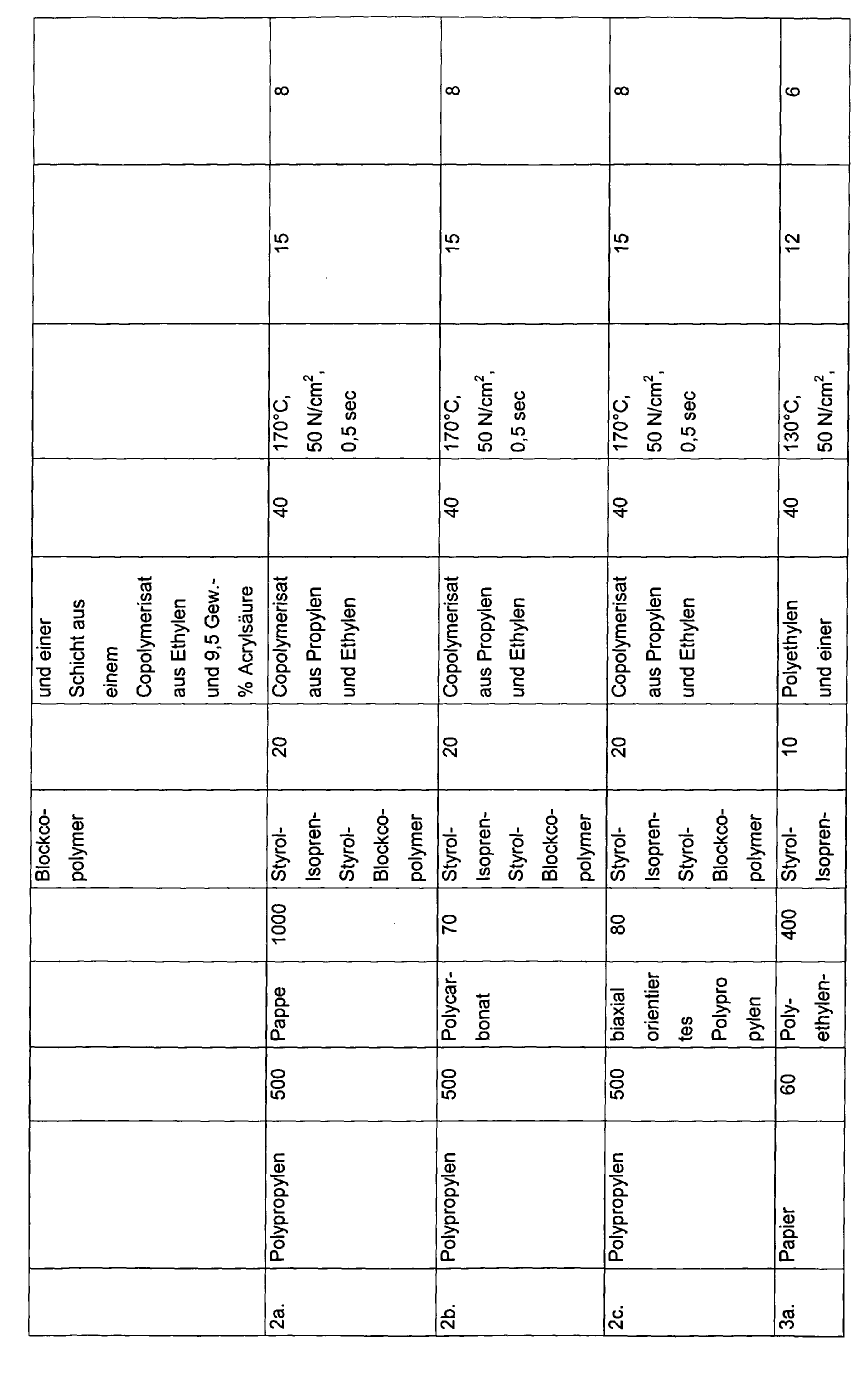

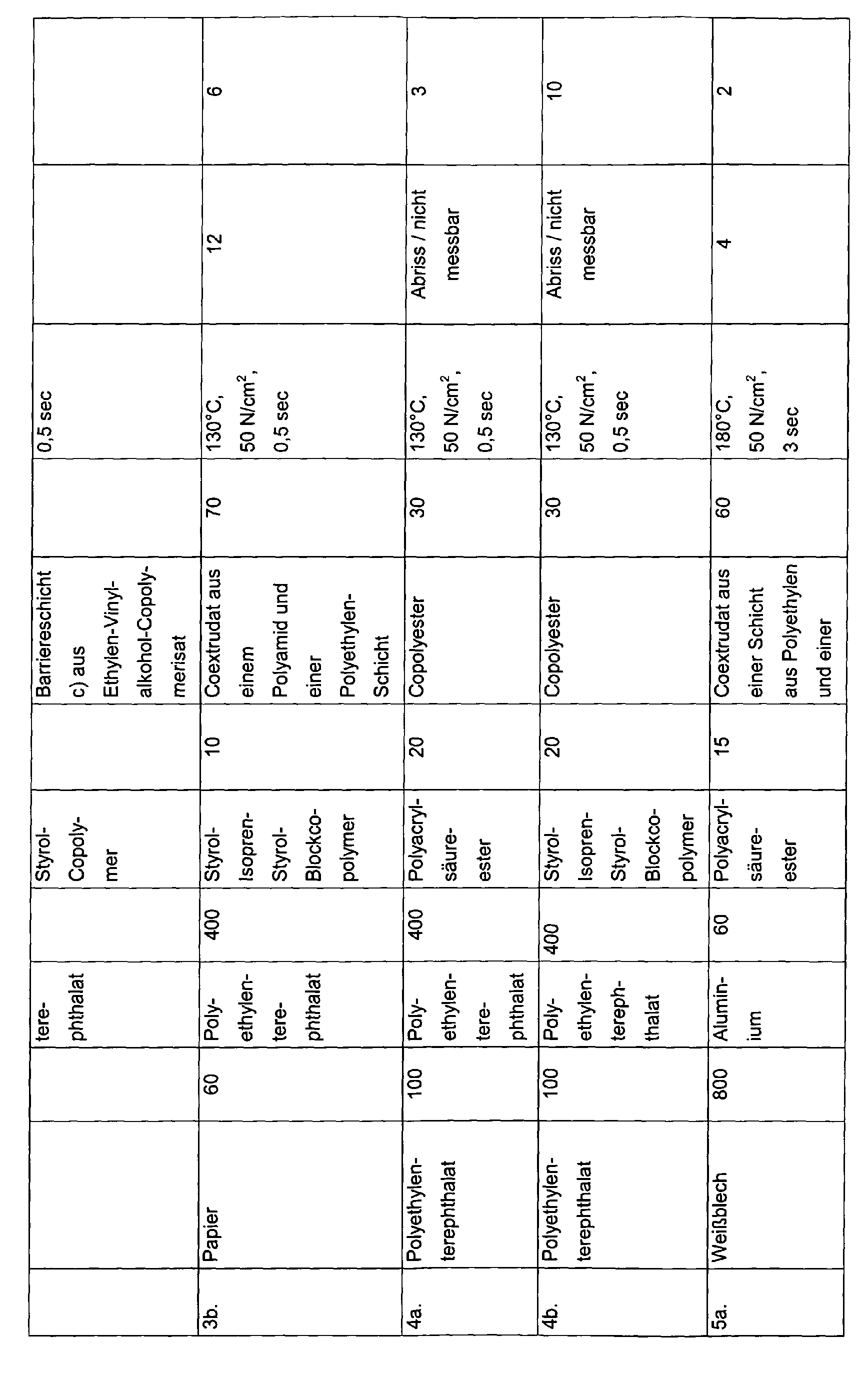

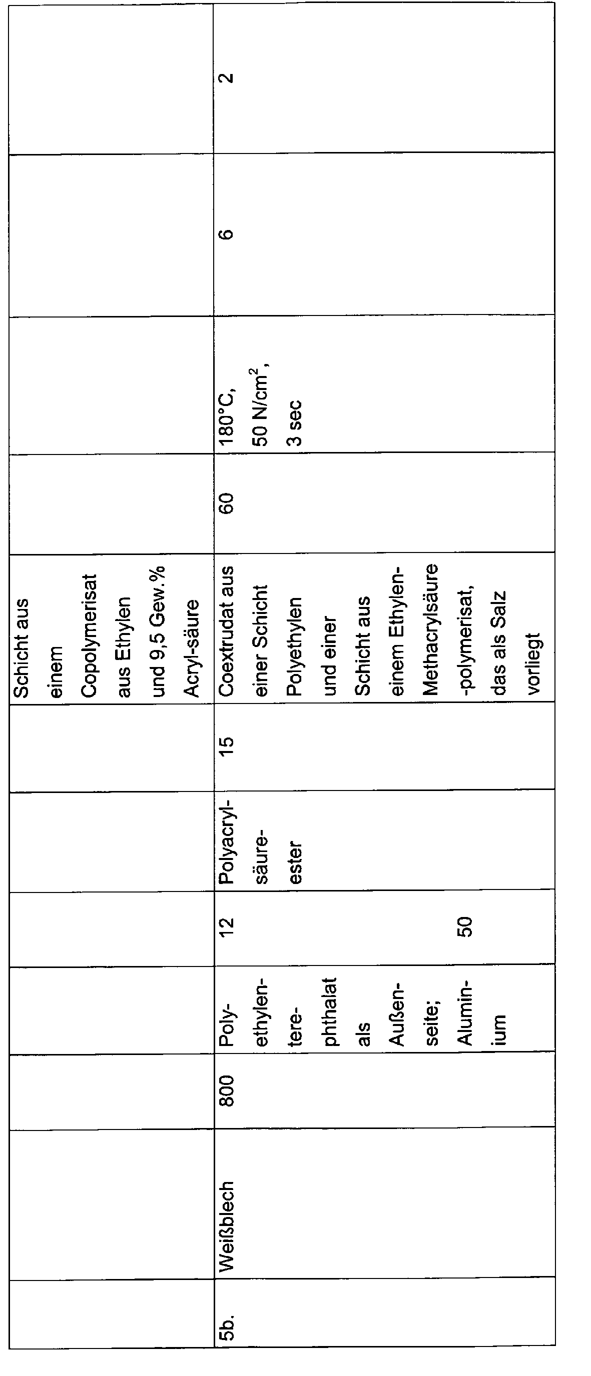

## Patentansprüche

1. Wiederverschließbare Verpackung aus zwei miteinander verbundenen Verpackungselementen X) und Y), **dadurch gekennzeichnet, dass**
das Verpackungselement X) eine Mehrschichtfolie umfassend wenigstens eine Siegelschicht a), wenigstens eine Schicht aus Haftklebstoff f) und wenigstens eine Trägerschicht g) aufweist und
das Verpackungselement Y) aus einem Material ohne Siegelschicht besteht,
wobei die Siegelschicht a) des Verpackungselements X) eine um wenigstens 5 °C niedrigere Erweichungstemperatur als das Material des Verpackungselements Y) aufweist,
und die beiden Verpackungselemente X) und Y) über eine Siegelung so verbunden sind, dass im Siegelbereich die Siegelfestigkeit zwischen der Siegelschicht a) und dem Material des Verpackungselements Y) größer ist als die Verbundhaftung zwischen der Siegelschicht a) bzw. einer Schichtfolge umfassend die Siegelschicht a) und Schicht aus Haftklebstoff f), wodurch beim ersten Öffnen der Verpackung diese Haftklebstoff-Schicht im Bereich der Siegelung zum Wiederverschließen freigegeben wird.

2. Verpackung gemäß Anspruch 1, **dadurch gekennzeichnet, dass** die Erweichungstemperatur der Siegelschicht a) um wenigstens 10 °C, bevorzugt um wenigstens 15 °C, besonders bevorzugt um wenigstens 20 °C niedriger als die Erweichungstemperatur des Materials des Verpackungselements Y) ist.

3. Verpackung nach Anspruch 1 oder 2, **dadurch gekennzeichnet, dass** im Siegelbereich die Siegelfestigkeit um wenigstens 1,5 N/15 mm, vorzugsweise wenigstens 2 N/15 mm höher ist als die Verbundhaftung in N/15 mm gemessen in Anlehnung an dieTestmethode FINAT Nr. 2.

4. Verpackung gemäß einem der Ansprüche 1 bis 3, **dadurch gekennzeichnet, dass** das Material des Verpackungselements Y) wenigstens ein thermoplastisches Polymerisat, wenigstens ein Metall, Papier, Pappe, Karton und/oder Glas ist und ggf. mehrschichtig aufgebaut ist.

5. Verpackung gemäß Anspruch 4, **dadurch gekennzeichnet, dass** das thermoplastische Polymerisat wenigstens ein Polymerisat ausgewählt aus der Gruppe umfassend Polyolefine, bevorzugt Polypropylene; Olefin-Copolymerisate; Polyester, bevorzugt Polyethylenterephthalat (PET) oder Polybutylenterephthalat (PBT); Copolyester; Polystyrole; Polyurethane; Polycarbonate; Polyvinylchloride; Polyvinylidenchloride und Polyamide ist.

6. Verpackung gemäß Anspruch 4, **dadurch gekennzeichnet, dass** das Metall wenigstens ein Metall ausgewählt aus der Gruppe umfassend Aluminium und Weißblech ist.

7. Verpackung gemäß einem der Ansprüche 1 bis 6, **dadurch gekennzeichnet, dass** die Erweichungstemperatur des Materials des Verpackungselements Y) wenigstens 100 °C beträgt.

8. Verpackung gemäß einem der Ansprüche 1 bis 7, **dadurch gekennzeichnet, dass** die Wandstärke des Verpackungselements Y) 50 bis 5000 µm, bevorzugt 100 bis 1000 µm, besonders bevorzugt 100 bis 500 µm, beträgt.

9. Verpackung gemäß einem der Ansprüche 1 bis 7, **dadurch gekennzeichnet, dass** die Siegelschicht a) auf wenigstens einem Polymeren ausgewählt aus der Gruppe umfassend Polyolefine, Polyester, Copolyester und Olefin-Copolymere basiert.

10. Verpackung gemäß Anspruch 9, **dadurch gekennzeichnet, dass** die Siegelschicht a) auf wenigstens einem Polymeren ausgewählt aus der Gruppe umfassend Polyethylene; Polyethylen hoher Dichte (HDPE), Polyethylen niedriger Dichte (LDPE) oder lineares Polyethylen niedriger Dichte (LLDPE); Copolyester; Polyester, bevorzugt PET und PBT; Ethylen-Propylen-Copolymerisat; Ethylen-Vinylacetat-Copolymerisat; Copolymerisate aus Ethylen und Estern der Acrylsäure oder Methacrylsäure; Copolymerisate aus Ethylen und Acrylsäure oder Methacrylsäure sowie deren Salze, bevorzugt Natrium- oder Magnesium-Salze, und Styrolcopolymerisate basiert.

11. Verpackung gemäß einem der Ansprüche 1 bis 10, **dadurch gekennzeichnet, dass** die Erweichungstemperatur der Siegelschicht a) 80 °C bis 160 °C, bevorzugt 100 °C bis 140 °C, beträgt.

12. Verpackung gemäß einem der Ansprüche 1 bis 11, **dadurch gekennzeichnet, dass** die Dicke der Siegelschicht a) 5 bis 80 µm, bevorzugt 10 bis 60 µm, ganz besonders bevorzugt 10 bis 30 µm, beträgt.

13. Verpackung gemäß Anspruch 12, **dadurch gekennzeichnet, dass** die Siegelschicht a) mehrlagig ist und zwischen der Schicht a) und der Schicht aus Haftklebstoff f) angeordnete Schichtfolge aus
b) ggf. einer Haftervermittlerschicht,
c) einer Barriereschicht,
d) ggf. einer Haftvermittlerschicht
e) ggf. wenigstens eine Schicht aus olefinischen Homo- und/oder Copolymeren
aufweist.

14. Verpackung gemäß Anspruch 13, **dadurch gekennzeichnet, dass** die Barriereschicht c) eine Gasbarriereschicht und/oder Migrationsbarriereschicht ist.

15. Verpackung gemäß einem der Ansprüche 13 oder 14, **dadurch gekennzeichnet, dass** die Barriereschicht c) auf wenigstens einem Polymer ausgewählt aus der Gruppe umfassend Ethylen-Vinylalkohol-Copolymerisat, Polyvinylidenchlorid, Polyester, Polyamid und Copolyamid basiert.

16. Verpackung gemäß einem der Ansprüche 13 bis 15, **dadurch gekennzeichnet, dass** die Dicke der Barriereschicht c) 0,5 bis 20 µm, bevorzugt 1 bis 10 µm, beträgt.

17. Verpackung gemäß einem der Ansprüche 13 bis 16, **dadurch gekennzeichnet, dass** die Gesamtdicke der Schichtfolge a) bis e) 5 bis 50 µm, bevorzugt 5 bis 30 µm beträgt.

18. Verpackung gemäß einem der Ansprüche 13 bis 17, **dadurch gekennzeichnet, dass** die Teilschichtfolge a) bis e) symmetrisch in Bezug auf die Barriereschicht c) aufgebaut ist.

19. Verpackung gemäß einem der Ansprüche 1 bis 18, **dadurch gekennzeichnet, dass** die Schicht aus Haftklebstoff f) auf wenigstens einem Polymer ausgewählt aus der Gruppe umfassend Polymere und Copolymere von Acrylsäureestern; Polymere und Copolymere von Polyvinylethern; Copolymere aus Butadien und Styrol, bevorzugt Styrol-Butadien-Styrol Copolymer (SBS); Copolymere aus Styrol und Isopren, bevorzugt Styrol-Isopren-Styrol Blockcopolymere (SIS); Copolymere aus Styrol, Butadien und Ethylen, bevorzugt Styrol-Ethylen-Butadien-Styrol Blockcopolymere (SEBS); Polyvinylacetate; Polyurethane; Polychloroprene; Polyisobutylene; Polyisoprene; Butylkautschuk und Naturlatex basiert.

20. Verpackung gemäß einem der Ansprüche 1 bis 12, **dadurch gekennzeichnet, dass** die Dicke der Schicht f) 2 bis 30 µm, bevorzugt bis 20 µm, beträgt.

21. Verpackung gemäß einem der Ansprüche 1 bis 20, **dadurch gekennzeichnet, dass** die Trägerschicht g) auf wenigstens einem Material ausgewählt aus der Gruppe umfassend thermoplastische Polymerisate, Metall, Papier, Pappe, Karton und Glas basiert.

22. Verpackung gemäß einem der Ansprüche 1 bis 21, **dadurch gekennzeichnet, dass** die Trägerschicht g) mehrschichtig aufgebaut ist und ggf. eine Gas-und/oder Aromabarriere-Schicht umfasst.

23. Verpackung gemäß einem der Ansprüche 1 bis 22 für die mehrmalige Entnahme von verpackten Güter, vorzugsweise von Lebensmitteln.
